# DEMANDE DE BREVET EUROPEEN

(11) **EP 4 721 556 A1**
(43) Date de publication de la demande: **08.04.2026**
(21) Numéro de dépôt: 25205753.4
(22) Date de dépôt: 30.09.2025
(51) Int. Cl.: A01K 13/00

(54) **MODULE DE BROSSAGE ET DISPOSITIF DE BROSSAGE POUR ANIMAUX DE BÉTAIL**

(30) Priorité: 01.10.2024 FR 2410581
(71) Demandeur: Actiwork, 01700 Beynost (FR)
(72) Inventeur: GREGOIRE, Alain, 01700 Neyron (FR)
(74) Mandataire: Cabinet Beau de Loménie

(57) **Abrégé**

Module de brossage (2) pour un dispositif de brossage (1) destiné à permettre à un animal de bétail de se frotter dessus de façon autonome, le module de brossage (2) comprenant une structure de support (4) dotée d'au moins un rail (5) profilé, une brosse (7) comprenant une âme (8) et une pluralité de fibres (9), les fibres (9) faisant saillie de l'âme (8), l'âme (8) et les fibres (9) étant orientés spatialement de telle sorte que la brosse (7) présente une forme de lamelle, le rail (5) étant doté d'un premier moyen de guidage, l'âme (8) étant dotée d'un deuxième moyen de guidage, les moyens de guidage étant complémentaires l'un de l'autre et permettant un emboîtement de l'âme (8) sur le rail (5) de manière à permettre la retenue de la brosse (7) sur la structure de support (4).

## Description

La présente invention a trait au domaine technique des dispositifs destinés au bien-être des animaux de bétail.

Par « animaux de bétail », l'on fait référence dans le présent texte aux animaux ongulés, ce qui inclut à la fois les animaux appartenant à la famille des bovins (par exemple les vaches, les bœufs, les taureaux, les bisons), des équins (par exemple les chevaux ou les ânes), des porcins (typiquement les cochons), des caprins (boucs ou chèvres par exemple).

Dans toute la suite du texte, le terme « animaux » ou « bétail » renvoie à l'expression « animaux de bétail ».

Plus particulièrement, l'invention se rapporte à un dispositif de brossage pour permettre au bétail de se frotter contre de manière autonome.

Le bien-être des animaux, et en particulier celui des animaux de bétail dans les élevages, revêt une importance croissante. D'une part, il est important pour les consommateurs de savoir que les animaux sont en bonne santé et bien traités. D'autre part, il a été prouvé que cela un impact économique direct : des animaux en meilleure forme et moins stressés sont généralement plus productifs, que ce soit en production laitière, en croissance ou en reproduction, optimisant ainsi les rendements agricoles.

Dans ce contexte, il est essentiel de tenir compte des besoins naturels des animaux de bétail. Ainsi, il a été par exemple constaté que les animaux de bétails, et en particulier les vaches ont l'habitude de se frotter contre des surfaces dures notamment pour soulager les démangeaisons, stimuler la circulation sanguine, et éliminer la saleté et les parasites de leur pelage. Un tel comportement contribue en outre à réduire leur stress.

En milieu naturel ou dans les pâturages, les vaches utilisent par exemple les arbres, les rochers ou d'autres surfaces rugueuses pour se gratter. Cependant, dans les élevages modernes, de telles surfaces peuvent manquer. Il est donc important de fournir des dispositifs adaptés pour assurer leur bien-être.

Dans l'état de la technique, plusieurs dispositifs de brossage d'animaux existent.

Des brosses statiques utilisent des poils insérés dans une base fixe, permettant aux animaux de se frotter librement sans intervention humaine ni besoin d'énergie externe. Bien que simples et peu coûteuses à la fabrication, de telles brosses présentent l'inconvénient majeur de manquer de durabilité : les poils, souvent fragiles ou mal fixés, s'arrachent sous la pression constante des animaux, notamment les bovins qui présentent une masse allant jusque 800 kg.

Cela entraîne une usure rapide du dispositif, nécessitant des remplacements fréquents sous peine de compromettre l'efficacité du brossage, les poils de telles brosses perdant rapidement en raideur. Enfin, le résultat quant au bien-être pour les vaches est discuté, la dureté de telles brosses étant insuffisante pour répondre à leur besoin.

Il est également fait usage de brosses motorisées à rouleau, lesquelles, permettent le massage et le brossage de vaches. Cependant, de telles brosses nécessitent un apport constant d'énergie pour fonctionner, ce qui engendre des coûts importants de mise en œuvre, de maintenance, et de consommation énergétique. De plus, la complexité des mécanismes implique un risque de pannes et de dysfonctionnements, ce qui réduit leur fiabilité à long terme. Enfin, le problème d'usure demeure présent. En outre, tout comme brosses statiques, les poils de brosses motorisées sont souvent trop souples pour offrir un frottement suffisamment rigide aux vaches, limitant ainsi leur efficacité.

L'invention se propose de répondre aux inconvénients de l'art antérieur.

Un premier objet est de proposer un module de brossage offrant un frottement efficace et agréable pour les animaux de bétails.

Un deuxième objet est de proposer un tel module qui ne nécessite pas d'énergie externe pour fonctionner.

Un troisième objet est de proposer un tel module capable de supporter un usage fréquent par des animaux de bétail, notamment de type bovin, et ayant une durabilité accrue par rapport aux brosses connue.

Un quatrième objet est de proposer un dispositif de brossage intégrant un module tel que présenté ci-dessus.

A cet effet, il est prévu en premier lieu un module de brossage pour un dispositif de brossage destiné à permettre à un animal de bétail de se frotter dessus de façon autonome, le module de brossage comprenant une structure de support dotée d'au moins un rail profilé, une brosse comprenant une âme et une pluralité de fibres , les fibres faisant saillie de l'âme , l'âme et les fibres étant orientées spatialement de telle sorte que la brosse présente une forme de lamelle, le rail étant doté d'un premier moyen de guidage , l'âme étant dotée d'un deuxième moyen de guidage , les moyens de guidage étant complémentaires l'un de l'autre et permettant un emboîtement de l'âme sur le rail de manière à permettre la retenue de la brosse sur la structure de support .

Les caractéristiques suivantes peuvent être prévues seules ou en combinaison :
- le premier moyen de guidage et le deuxième moyen de guidage définissent un jeu fonctionnel permettant un basculement de l'âme par rapport au rail lorsqu'un animal de bétail se frotte sur la brosse ;
- le rail intègre une base , l'âme comprenant une section courbe , le premier moyen de guidage englobant une partie saillante s'étendant à partir de la base , le deuxième moyen de guidage intégrant une rainure , la rainure recevant la partie saillante ;
- le rail comprend deux parties saillantes intégrant des retours, la section courbe comprenant deux rainures ménagées de part et d'autre d'un plan passant par le milieu de la section courbe ;
- le module de brossage comprend au moins deux rails, chacun étant muni d'une brosse ;
- les rails sont parallèles entre eux ;
- le module de brossage comprend plusieurs joues définissant les côtés d'un ensemble de réception, l'ensemble de réception étant doté d'un fond et formant avec les joues une cavité dotée d'un fond, la structure de support étant solidaire du fond ;

Il est prévu en deuxième lieu un dispositif de brossage comprenant une structure porteuse, et au moins un module de brossage tel que présenté ci-dessus, le module de brossage étant solidaire de la structure porteuse, la structure porteuse étant apte à être solidaire d'une surface d'ancrage ;

Les caractéristiques suivantes peuvent être prévues seules ou en combinaison :
- la structure porteuse comprend un mât comprenant une première portion, un module de brossage étant solidaire de la première portion et d'un socle , le socle étant destiné à être solidaire d'une surface d'ancrage ;
- le socle définit une forme générale de tétraèdre présentant une assise et un sommet, la première portion étant solidaire du socle, la première portion passant par le sommet, lorsque l'assise repose sur le sol, la première portion s'étend orthogonalement à partir du socle.
- le mât intègre une deuxième portion, et une troisième portion orthogonale par rapport à la première portion, un module de brossage étant solidaire de la deuxième portion et/ou un module de brossage étant solidaire de la troisième portion, la deuxième portion étant solidaire d'une part de la première portion, et d'autre part de la troisième portion, la première portion et la troisième portion s'étendant selon des directions orthogonales l'une de l'autre.
- une cale de réglage est interposée entre le module de brossage et la structure porteuse

D'autres caractéristiques et avantages de l'invention apparaîtront plus clairement, et de manière concrète à la lecture de la description ci-après de modes de réalisation, donnée à titre d'exemple non limitatif, et faite en référence aux dessins annexés, dans lesquels :
[Fig. 1] La figure 1 représente une vue schématique en perspective d'une première mise en œuvre d'un dispositif de brossage ;
[Fig. 2] La figure 2 représente une vue schématique en perspective éclatée de la première mise en œuvre d'un dispositif de brossage ;
[Fig. 3] La figure 3 représente une vue schématique en coupe d'un module de brossage selon le plan III-III de la figure 1, avec un détail sur la fixation des brosses ;
[Fig. 4] La figure 4 représente une vue schématique en perspective d'une brosse et d'un rail, avec des détails sur une âme de la brosse, et une partie extrême de la brosse ;
[Fig. 5] La figure 5 représente une vue schématique en perspective d'une deuxième mise en œuvre d'un dispositif de brossage ;
[Fig. 6] La figure 6 représente une vue schématique en coupe d'une troisième mise en œuvre du dispositif de brossage selon le plan VI-VI de la figure 5 ;
[Fig. 7] La figure 7 représente une vue schématique en perspective d'une troisième mise en œuvre d'un dispositif de brossage ;
[Fig. 8] La figure 8 représente une vue schématique en coupe d'une troisième mise en œuvre du dispositif de brossage selon le plan VIII-VIII de la figure 7.

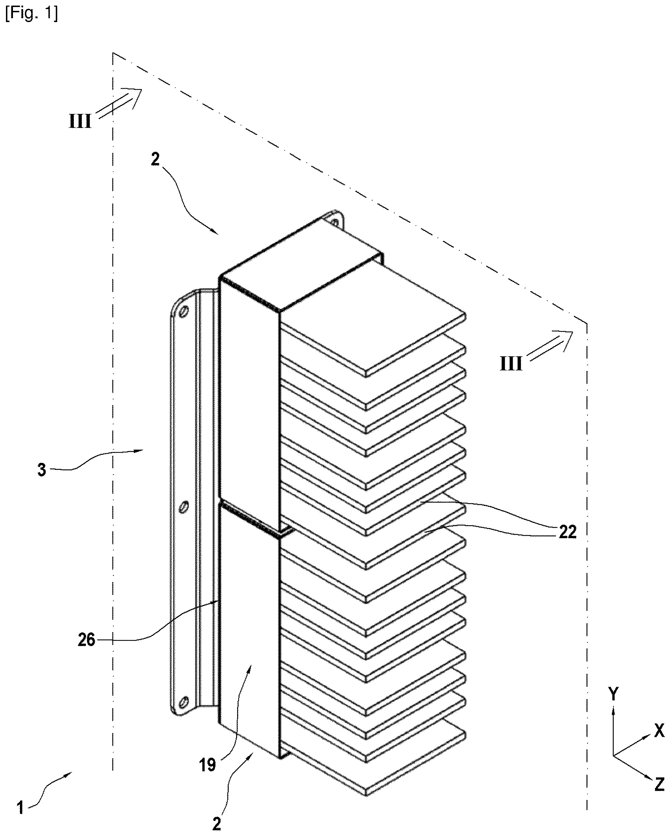

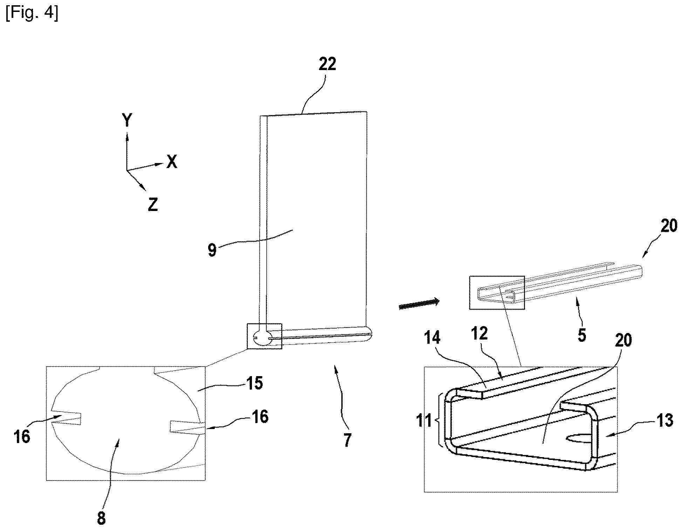

L'on se reporte à la figure 1, et aux figures 4 à 7 représentant différentes mises en œuvre possibles d'un dispositif de brossage 1.

De manière commune aux mises en œuvre, le dispositif de brossage 1 comprend un module de brossage 2 solidaire d'une structure porteuse 3. Comme détaillé plus loin dans le présent texte, la structure porteuse 3 permet de solidariser le module de brossage 2 à une surface d'ancrage (non représentée sur les figures). Les surfaces d'ancrage possibles sont détaillées plus loin dans le présent texte.

Une telle structure porteuse 3 est suffisamment rigide pour pouvoir résister aux actions mécaniques exercées par un animal de bétail (non représenté sur les figures) se frottant contre le module de brossage 2.

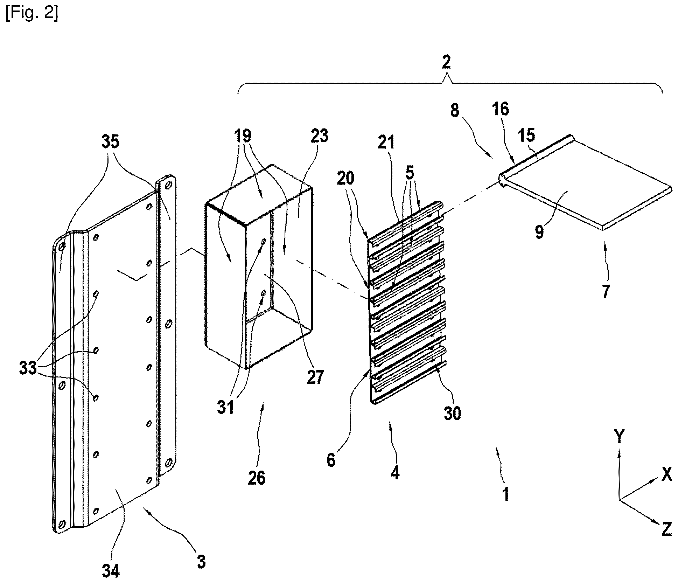

L'on décrit plus particulièrement le module de brossage en référant notamment aux figures 2 à 4.

Tel que représenté, le module de brossage 2 comprend une structure de support 4 comprenant une plaque de support 6 sur laquelle est fixé au moins un rail 5 profilé, par exemple réalisé en matériau métallique. La structure de support 4 est avantageusement munie d'une face plane, facilitant la mise en place des rails sur la structure de support 4.

Avantageusement, les rails 5 sont soudés ou vissés sur la structure de support 4. Chaque rail 5 étant destiné à recevoir une brosse 7, un assemblage mécano-soudé, ou vissé permettant d'obtenir une grande rigidité. Une telle caractéristique contribue à éviter toute déformation du fait de l'effort exercé par l'animal sur le module de brossage 2.

Dans les modes de réalisation représentés, les rails 5 sont rectilignes, et disposés parallèlement les uns des autres de sorte à former des rangées. Il est possible d'avoir une densité de brosses 7 accrue par rapport aux dispositifs connus. Cependant, d'autres dispositions sont envisageables, par exemple en chevron, ou selon d'autres géométries, par exemple des rangées non parallèles.

Dans des modes de réalisation non représentés, un ou plusieurs rails 5 s'étendent en définissant une courbe, ou présentent une portion rectiligne et une portion courbe.

Le module de brossage 2 comprend une brosse 7 intégrant une âme 8 et une pluralité de fibres 9, également dénommés poils. La brosse 7 présente spatialement une forme générale de lamelle. Autrement dit, les fibres 9 s'étendent sensiblement à partir de l'âme 8 selon une même direction. En d'autres termes, lorsque observés globalement, les fibres 9 sont implantées les unes par rapport aux autres selon une génératrice définie par la forme générale d'extension de l'âme 8.

Une telle forme de lamelle, est avantageuse, car permet d'obtenir une grande rigidité, ce qui est particulièrement apprécié par l'animal se frottant contre le module de brossage 2. En outre, une telle forme de lamelle facilite le positionnement des brosses 7 selon des rangées, permettant d'avoir une densité importante de fibres 9, ayant pour effet d'accroître l'effet de rigidité, et donc le ressenti de bien-être pour l'animal utilisant le dispositif de brossage 1.

Dans toute la suite du présent texte, l'on définit par rapport à l'âme 8 un repère orthogonal XYZ comprenant trois axes perpendiculaires deux à deux, à savoir :
- un axe X, confondu avec la direction générale d'extension de l'âme 8, définissant une direction longitudinale ;
- un axe Y, définissant une direction verticale, qui avec l'axe X définit un plan XY vertical ;
- un axe Z, définissant une direction transversale, les axes YZ définissant un plan transversal, les axes XZ définissant un plan horizontal.

Avantageusement, l'âme 8 est réalisée dans un matériau déformable de manière à pouvoir s'adapter à la forme du rail 5 lorsqu'emboîté dans le rail 5, comme précisé plus loin dans le présent texte.

Avantageusement, les fibres 9 et l'âme 8 sont réalisées en matériau thermoplastique, ou assimilé. Un tel matériau est avantageux car bon marché, moulable, et offrant la rigidité nécessaire pour résister aux efforts exercés par le bétail lors de l'utilisation du dispositif de brossage 1.

Avantageusement, les fibres 9 sont venues de matière de l'âme 8, c'est-à-dire sont réalisées simultanément avec l'âme 8. En d'autres termes, les fibres 9 apparaissent comme étant une extension intégrée de l'âme 8 en elle-même, sans ligne de séparation distincte. La solidité de la brosse 7, et la résistance à l'arrachement des fibres 9 est ainsi renforcée. De cette façon, la durabilité du module de brossage 2 est augmentée.

Avantageusement, les fibres 9 présentent une longueur adaptable en fonction du type et de la morphologie des animaux destinés à utiliser le dispositif de brossage 8.

Il est par exemple prévu qu'une fibre 9 présente un diamètre s'étendant dans une plage allant de 1,5 mm à 4 mm, préférentiellement de 2,5 mm à 3,5 mm, et idéalement autour de 3,2 mm. Un tel diamètre est celui pour lequel est obtenu le meilleur compromis entre rigidité et durabilité.

Avantageusement, les fibres 9 présentent une longueur variable, dépendant du type et de la morphologie des animaux destinés à utiliser le dispositif de brossage 8.

Il est par exemple prévu qu'à partir de l'âme 8, une fibre s'étend par exemple dans une plage allant de 15 à 35 cm, et plus préférentiellement entre 20 et 30 cm. Une telle longueur est celle pour laquelle est obtenu le meilleur compromis entre rigidité et durabilité.

De manière à retenir la brosse 7 sur la structure de support 4, le rail 5 est doté d'un premier moyen de guidage, l'âme 8 intégrant un deuxième moyen de guidage, complémentaire du premier moyen de guidage. Aussi, le premier moyen de guidage, et le deuxième moyen de guidage permet un assemblage par emboîtement de l'âme 8 sur le rail 5.

Comme visible sur les modes de réalisation représentés, et en particulier sur la figure 4, le premier moyen de guidage et le deuxième moyen de guidage sont configurés pour permettre un emboîtement en enfilant, insérant l'âme 8 sur le rail 5 selon une direction longitudinale. Un tel emboîtement s'effectue de manière simple, sans nécessiter un effort particulier ni d'outils spécifiques. Un tel emboîtement permet un remplacement aisé de la brosse 7 si cette dernière est détériorée.

Dans d'autres modes de réalisation non représentés, le premier moyen de guidage et le deuxième moyen de guidage sont réalisés pour permettre un emboîtement selon une direction transversale, par exemple par pression de l'âme 8 sur le rail 5.

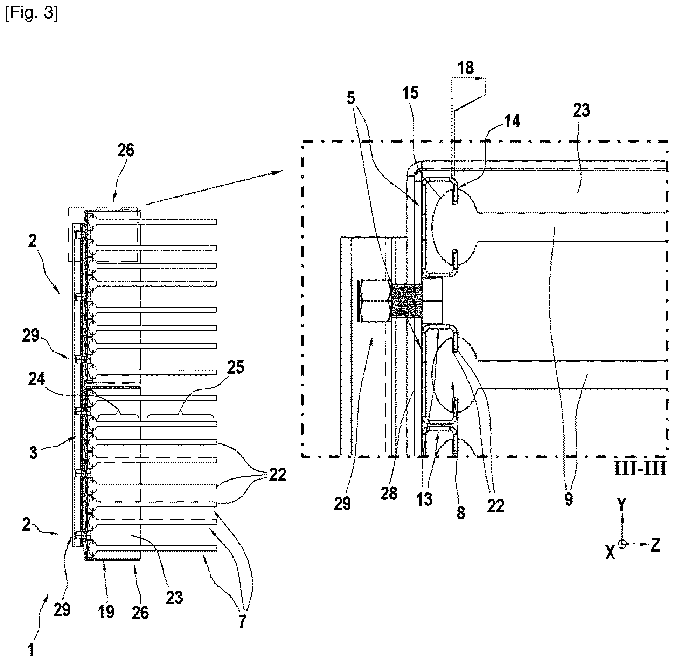

Avantageusement, il est prévu un jeu fonctionnel 18 entre le premier moyen de guidage et le deuxième moyen de guidage, visible sur la figure 3. Un tel jeu fonctionnel 18 permet de faciliter l'emboîtement de l'âme 8 au sein du rail 5.

Un tel jeu fonctionnel 18 autorise également un léger mouvement de rotation de l'âme 8 au sein du rail 5 lorsqu'un animal se frotte contre la brosse 7, ce qui a pour conséquence de provoquer un basculement de la brosse 7. Ce basculement améliore le ressenti de bien-être pour le bétail utilisant le dispositif de brossage 1, car permet de changer l'orientation générale des fibres 9.

Avantageusement, le rail 5 intègre une base 10, sensiblement plane, de sorte à pouvoir répartir au maximum sur la structure de support 4 les efforts exercés par le bétail sur la brosse 7.

Avantageusement, un premier moyen de guidage comprend au moins une partie saillante 11, préférentiellement deux parties saillantes 11 s'étendant à partir de la base 10.

Dans les modes de réalisation représentés, les parties saillantes 11 définissent un angle à 90° par rapport à la base 10, et s'étendent parallèlement l'une de l'autre. Les parties saillantes 11 sont symétriques l'une par rapport à l'autre par rapport à un plan passant par le milieu de la base 10. De la sorte, il est conféré au rail 5 une section transversale en U.

Avantageusement, une partie saillante 11 comprend un retour 12, relié par une section de jonction 13 à la base 10. Dans les modes de réalisations représentés, il est prévu que chaque partie saillante 11 intègre une section de jonction 13 et un retour 12 permettant d'éviter un arrachement de la brosse 7 du rail 5.

Avantageusement, le retour 12 définit sensiblement une première surface de guidage 14, laquelle facilite l'emboîtement de l'âme 8 sur le rail 5, par glissement plan sur plan avec une surface complémentaire agencée sur l'âme. En outre, lorsqu'un effort transversal s'exerce sur la brosse 7, celui-ci se répartit de manière homogène sur la première surface de guidage 14.

L'on décrit plus spécifiquement l'âme 8, en se référant notamment aux figures 3 et 4.

Avantageusement, l'âme 8 comprend une section courbe 15 présentant une structure arrondie, par exemple ovale ou circulaire, ce qui permet à l'âme 8 de fléchir lorsqu'elle subit une contrainte de compression par l'exercice d'efforts longitudinaux. Une telle disposition permet d'améliorer l'emboîtement de l'âme 8 sur le rail 5, en particulier si le rail 5 ne s'étend pas de manière rectiligne. En outre, une telle structure arrondie permet à l'âme 8 de présenter une résistance accrue aux contraintes mécaniques.

Avantageusement, le deuxième moyen de guidage comprend une rainure 16 ménagée au sein de l'âme 8. Préférentiellement l'âme 8 comprend deux rainures 16 ménagées dans la section courbe 15. Chaque rainure 16 est apte à recevoir le premier moyen de guidage, en l'occurrence une partie saillante 11. Comme il peut être observé sur les figures, en particulier la figure 4, la section courbe comprend deux rainures 16 ménagées de part et d'autre d'un plan passant par le milieu de la section courbe 15.

Comme il peut être observé sur les figures, les rainures 16 comprennent au moins une deuxième surface de guidage 17, s'étendant avantageusement selon un plan longitudinal. De la sorte, l'emboîtement entre l'âme 8 et le rail 5 est favorisé, en réalisant une liaison plan sur plan.

Dans des modes de réalisation non représentés, l'âme 8 définit une forme plate ou anguleuse, c'est-à-dire présente une section transversale polygonale. Pour une telle forme d'âme, les rainures 16 sont ménagées sur un côté de l'âme, le rail présentant une forme complémentaire à une telle âme 8.

Comme représenté sur le détail de la figure 3, il peut être observé que la partie saillante 11 comprend avantageusement deux premières surfaces de guidage 14 parallèles, l'une en regard de la base 10, l'autre sur la face opposée du retour 12, en regard des fibres 9.

Une rainure 16 comprend avantageusement deux deuxièmes surfaces de guidage 17 en regard l'une de l'autre et parallèles entre elles.

Avantageusement, la distance entre les deux premières surfaces de guidage 14 est supérieure à la distance entre les deux deuxièmes surfaces de guidage 17, ce qui permet de conférer le jeu fonctionnel 18 lors de l'assemblage de la brosse 7. Le jeu 18 peut ainsi être adapté facilement en modifiant cet écart de distance.

Avantageusement, le module de brossage 2 comprend une joue 19 disposée à une partie extrême 20 d'un rail 5, préférentiellement à chaque partie extrême 20 de chaque rail 5. Une telle joue 19 permet arrêter en translation les âmes 8 emboîtées dans chaque rail 5, en formant une butée.

Avantageusement, une joue 19 est également disposée juxtaposée, adjacente à un rail 5, et s'étend longitudinalement. Préférentiellement, les rails 5 jouxtant des bords extrêmes 21 de la structure de support 4 sont concernés.

Avantageusement, une joue 19 s'étend depuis l'âme 8 jusqu'à se positionner en regard des fibres 9 entre l'âme 8 et une des terminaisons 22 des fibres 9. En d'autres termes, une joue 19 comprend une surface d'arrêt 23 faisant face à une partie des fibres 9. Plus spécifiquement, et comme visible notamment sur la figure 3, les fibres 9 présentent une portion couverte 24 c'est-à-dire ne s'étendant pas transversalement au-delà de la joue 19, et une portion libre 25, en prolongement de la portion couverte 24.

Dans une telle configuration, les fibres 9 qui subissent une flexion causée par un animal se frottant sur la brosse 7, entrent en collision avec une surface d'arrêt 23, ce qui bloque la déformation des portions couvertes, faisant fléchir les fibres 9 par un bord d'une joue 19. Ainsi, la déflexion des fibres 9 est contrôlée, ce qui offre un résultat optimal en termes de bien-être pour le bétail utilisant le dispositif de brossage 1.

Dans les modes de réalisation représentés, le module de brossage 2 intègre un ensemble de réception 26 comprenant un fond 27 destiné à être solidaire d'une face libre 28 de la plaque de support 6, c'est-à-dire dépourvue de rail 5 (visible sur le détail de la figure 3).

Avantageusement, le fond 27 présente une forme générale de quadrilatère, préférentiellement un rectangle. A partir du fond 27 s'étendent des côtés, préférentiellement quatre, de sorte à former un boîtier.

Comme il peut être constaté sur les modes de réalisation représentés, les côtés forment des joues 19 telles que décrites ci-dessus. Les joues 19 forment avec le fond 27 une cavité. Une telle disposition facilite le montage, et le démontage, puisqu'il suffit de désolidariser la structure de support 4 de l'ensemble de réception 26 pour pouvoir libérer en translation les brosses 7 des rails 5. Les avantages liés à l'utilisation des joues 9 demeurent.

Avantageusement, la structure de support 4 comprend des perforations 30 coaxiales avec des trous 31 ménagés sur l'ensemble de réception 26, permettant la solidarisation de la structure de support 4 au fond 27 par l'intermédiaire d'un moyen de fixation 29, par exemple une vis.

De manière à faciliter la fixation de l'ensemble de réception 26 sur la structure porteuse 3, les trous 31 sont coaxiaux avec des orifices 33 prévus sur la structure porteuse 3, de manière à utiliser les mêmes moyens de fixation 29 que ceux permettant de solidariser la structure de support 4 au fond 27. Ainsi, le nombre de pièces à utiliser pour la réalisation du dispositif de brossage 1 est réduit. Une telle disposition facilite le montage du dispositif de brossage 1.

L'on présente désormais de manière non limitative différentes mises en œuvre du dispositif de brossage 1.

Communément à toutes les mises en œuvre, le dispositif de brossage 1 intègre un ou plusieurs modules de brossage 2 tel que décrit ci-dessus.

Dans une première mise en œuvre représentée figure 1 à 3, il est prévu que le module de brossage 2 soit solidaire d'une surface d'ancrage (non représentée) s'étendant selon un plan longitudinal. Une telle surface d'ancrage est par exemple un mur, une paroi ou une platine solidaire d'un poteau. Autrement dit, dans une telle première mise en œuvre, la structure de support 4 s'étend avantageusement selon un plan longitudinal.

Une telle structure porteuse 3 comprend par exemple une portion porteuse 34, adaptée pour accueillir au moins un module de brossage 2, préférentiellement plusieurs modules de brossage 2, et deux portions de fixation 35 destinées à être solidarisées à un emplacement fixe (non représenté), par exemple un mur, par exemple à l'aide de vis (non représentées).

Une telle première mise en œuvre est très simple, peu onéreuse, et donne satisfaction au bétail utilisant le dispositif de brossage 1.

Dans une deuxième mise en œuvre, un module de brossage 2 est positionné similairement à celui de la première mise en œuvre, c'est-à-dire que la structure de support 4 s'étend dans un plan longitudinal.

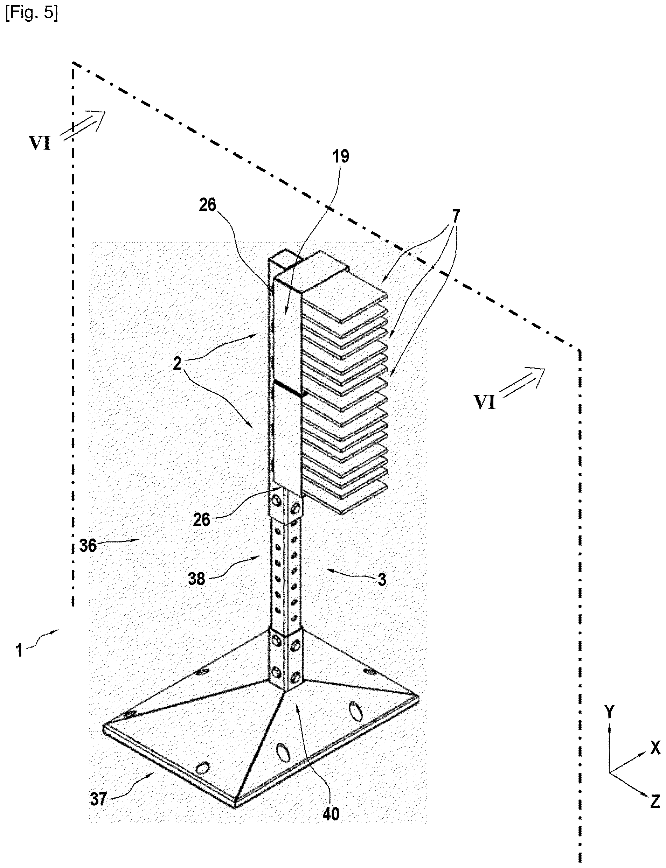

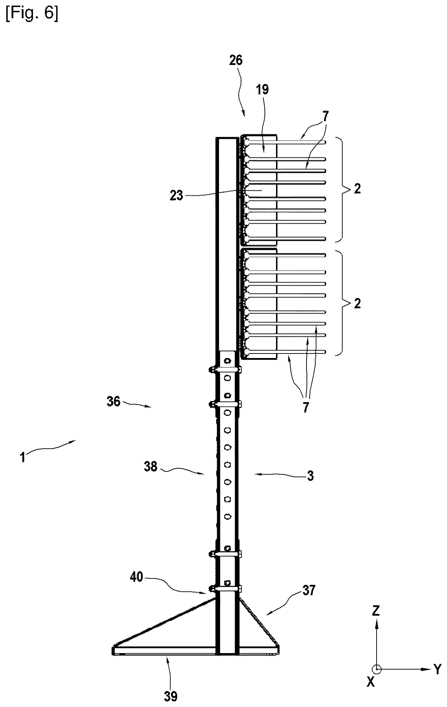

Dans la deuxième mise en œuvre représentée sur les figures 5 et 6, la structure porteuse 3 comprend un mât 36 destiné à être solidarisé préférentiellement à une surface d'ancrage formée par le sol, par l'intermédiaire d'un socle 37.

Dans une variante de la deuxième mise en œuvre, la structure porteuse est solidaire d'une surface d'ancrage s'étendant longitudinalement, par exemple un mur, une paroi ou une platine solidaire d'un poteau.

Avantageusement, le mât 36 s'étend depuis le sol en définissant une première portion 38, par exemple selon une direction avantageusement orthogonale au sol. La première portion 38 comprend au moins un module de brossage 2, préférentiellement plusieurs modules de brossage 2 fixés sur la première portion 38, la première portion 38 étant solidaire du socle 37.

Avantageusement, le mât 36 est détachable du socle 37 par le biais d'un mécanisme permettant un retrait facile et sécurisé, non visible sur les figures et non détaillé ici.

Dans la deuxième mise en œuvre, le socle 37 englobe une assise 39, destinée à entrer en contact avec le sol, par exemple par appui plan, et un sommet 40, conférant au socle 37 par exemple une forme de tétraèdre. Le mât 36 est solidarisé au socle 37 en passant par le sommet 40, en étant par exemple maintenu en position dans un logement prévu à cet effet (non visible sur les figures).

Une telle forme de tétraèdre est avantageuse, car permet de maximiser l'assise 39, ce qui permet de favoriser la stabilité du dispositif de brossage 1. En outre, il est évité une hauteur trop importante, ce qui pourrait entraver l'accès du bétail au module de brossage 7, ou bien risquerait de blesser l'animal sur sa partie basse. Une hauteur trop importante pourrait également être gênante pour le passage d'un véhicule.

En variante, le socle 37 comprend une platine simple, ou bien un plot.

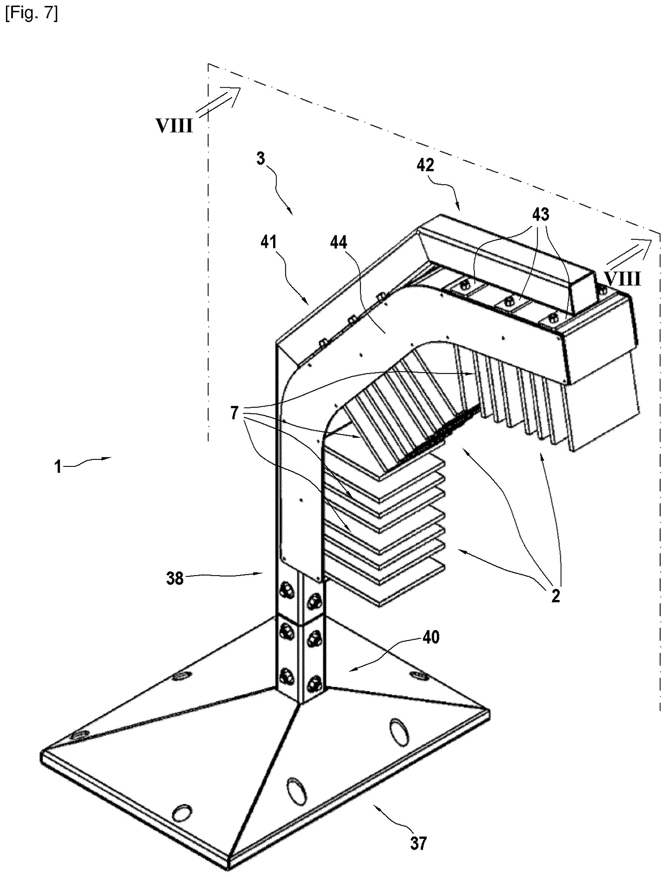

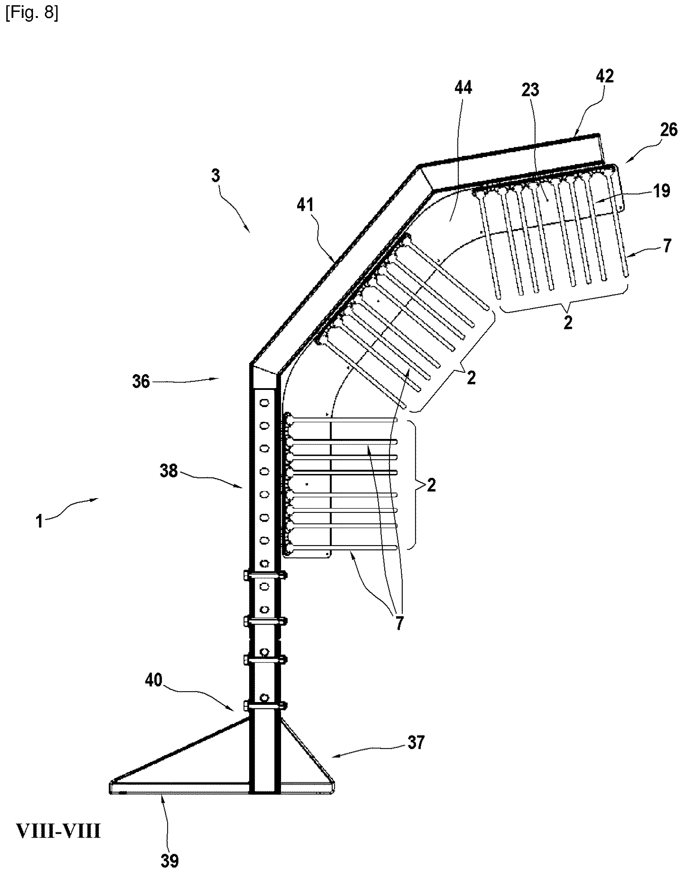

L'on décrit à présent une troisième mise en œuvre représentée sur les figures 7 et 8.

Une telle troisième mise en œuvre reprend les caractéristiques de la deuxième mise en œuvre quant au socle 37 et à la première portion 38 munie d'au moins un module de brossage 2.

Dans une telle troisième mise en œuvre, le mât comprend une deuxième portion 41, munie d'au moins un module de brossage 2. La deuxième portion 41 est avantageusement solidaire et en prolongement de la première portion 38, mais s'étend selon une direction différente de la première portion 38.

Dans une telle mise en œuvre, le mât 36 définit un angle préférentiellement aigu entre la première portion 38 et la deuxième portion 41. Tel que représenté, la première portion 38 s'étend orthogonalement par rapport à l'assise 39, la deuxième portion 41 est oblique.

En variante, l'angle entre la première portion 38 et la deuxième portion 41 est droit, la deuxième portion 41 s'étendant selon une direction appartenant à un plan passant par le plan défini par l'assise 39.

De cette manière, il est possible d'avoir un dispositif de brossage 1 comportant plusieurs modules de brossage 2 s'étendant dans des directions, des orientations différentes. Ainsi, un animal peut se frotter simultanément contre plusieurs modules de brossage disposés selon différentes orientations, permettant de cibler diverses parties de son corps, ce qui améliore son bien-être.

Avantageusement, la troisième mise en œuvre comprend une troisième portion 42, munie d'au moins un module de brossage 2. La troisième portion 42 est solidaire et en prolongement de la deuxième portion 41, mais s'étend selon une direction différente de la deuxième portion 41.

Avantageusement, la direction d'extension de la deuxième portion 41 et la direction d'extension de la troisième portion 42 définissent un angle aigu. Dans d'autres modes de réalisation, la troisième portion 42 s'étend selon une direction orthogonale par rapport à la direction d'extension de la première portion 38. Aussi, dans de telles configurations, un module de brossage 2 est positionné de manière à cibler le dos de l'animal, ou bien sa tête.

La deuxième et troisième mise en œuvre présente une application avantageuse lorsqu'aucune surface d'ancrage autre que le sol n'est à disposition de l'utilisateur. Un tel cas concerne par exemple un pré ou champ dépourvu d'arbre, ou bien pour la situation où l'on souhaiterait positionner à distance des murs ou des cloisons un dispositif de brossage 1.

Selon les différentes mises en œuvre, la première portion 38 et/ou la deuxième portion 41 et/ou la troisième portion 42 comprennent plusieurs modules de brossage 2.

Communément aux modes de réalisation, le dispositif de brossage 1 comprend une ou plusieurs cales de réglage 43 interposée entre la structure porteuse 3 et le module de brossage 2. En ajustant la hauteur des cales de réglage 43, la position d'un module de brossage 2 est modifiée par rapport à la structure porteuse 3, c'est-à-dire soit éloigné ou rapproché. De cette manière, le dispositif de brossage 1 peut être adapté à la morphologie des animaux se frottant sur les brosses 7.

Communément aux différentes mises en œuvre, et comme représenté sur les figures 7 et 8, la structure porteuse 3 comprend des plaques de carénage 44 permettant de protéger les joues 19 des modules de brossage 2, et contribue ainsi à rendre le dispositif de brossage plus durable.

Le dispositif de brossage 1 trouve des applications avantageuses pour un grand nombre d'animaux de bétail et en particulier les bovidés (par exemple les vaches, les bœufs, les taureaux, ou les bisons), les animaux équins (par exemple les chevaux ou les ânes), les animaux porcins (typiquement les cochons), et les animaux caprins (boucs ou chèvres par exemple).

Le dispositif de brossage 1 est destiné à être mise en place au sein d'exploitation agricole, tant au sein d'espaces intérieurs par exemple une étable, une zone de traite, ou une zone de soins, que dans des espaces extérieurs à savoir une aire de pâturage, une aire de repos. Cependant, certaines des mises en œuvre du dispositif de brossage 1 peuvent être installées au sein de véhicule.

Le dispositif de brossage 1 peut être également installé au sein d'autres espaces recevant des animaux, par exemple au sein de salons ou foires agricoles, de zones de refuge, des parcs animaliers, ou bien des établissements vétérinaires.

Le dispositif de brossage 1 tel que présenté ci-dessus offre de nombreux avantages parmi lesquels :
- le caractère modulaire du module de brossage 2, permettant un montage et démontage simple du dispositif de brossage 1 ;
- un remplacement facile des brosses 7 ;
- une adaptation aisée du dispositif de brossage 1 aux différents animaux, et à leur morphologie ;
- une utilisation économe, puisque ne nécessitant aucun apport d'énergie externe ;
- une conception des brosses 7 évitant un arrachage et/ou une usure prématurée des fibres 9, limitant la fréquence de remplacement des brosses 7.

## Revendications

1. Module de brossage (2) pour un dispositif de brossage (1) destiné à permettre à un animal de bétail de se frotter dessus de façon autonome, le module de brossage (2) comprenant :
- une structure de support (4) dotée d'au moins un rail (5) profilé,
- une brosse (7) comprenant une âme (8) et une pluralité de fibres (9), les fibres (9) faisant saillie de l'âme (8), l'âme (8) et les fibres (9) étant orientées spatialement de telle sorte que la brosse (7) présente une forme de lamelle,
- le rail (5) étant doté d'un premier moyen de guidage (11), l'âme (8) étant dotée d'un deuxième moyen de guidage (16), les moyens de guidage (11, 16) étant complémentaires l'un de l'autre et permettant un emboîtement de l'âme (8) sur le rail (5) de manière à permettre la retenue de la brosse (7) sur la structure de support (4).

2. Module de brossage (2) selon la revendication précédente, **caractérisé en ce que** le premier moyen de guidage (11) et le deuxième moyen de guidage (16) définissent un jeu fonctionnel (18) permettant un basculement de l'âme (8) par rapport au rail (5) lorsqu'un animal de bétail se frotte sur la brosse (7).

3. Module de brossage (2) selon la revendication précédente, **caractérisé en ce que** le rail (5) intègre une base (10), l'âme (8) comprenant une section courbe (15), le premier moyen de guidage englobant une partie saillante (11) s'étendant à partir de la base (10), le deuxième moyen de guidage intégrant une rainure (16), la rainure (16) recevant la partie saillante (11).

4. Module de brossage (2) selon la revendication précédente, **caractérisé en ce que** la section courbe (15) est circulaire ou ovale, le rail (5) comprend deux parties saillantes (11) intégrant des retours (12), la section courbe (15) comprenant deux rainures (16) ménagées de part et d'autre d'un plan passant par le milieu de la section courbe (15).

5. Module de brossage (2) selon l'une quelconque des revendications précédentes, **caractérisé en ce qu'**il comprend au moins deux rails (5), chacun étant muni d'une brosse (7).

6. Module de brossage (2) selon la revendication précédente, **caractérisé en ce que** les rails (5) sont parallèles entre eux.

7. Module de brossage (2) selon l'une quelconque des revendications précédentes, **caractérisé en ce qu'**il comprend au moins une joue (19) disposée à une partie extrême (20) d'un rail (5) et/ou juxtaposée au rail (5), la joue (19) s'étendant depuis l'âme (8) jusqu'à se positionner en regard des fibres (9), entre l'âme (8) et une des terminaisons (22) des fibres (9).

8. Module de brossage (2) selon la revendication précédente, **caractérisé en ce qu'**il comprend plusieurs joues (19) définissant les côtés d'un ensemble de réception (18), l'ensemble de réception (18) étant doté d'un fond (27), le fond (27) formant avec les joues (19) une cavité, la structure de support (4) étant solidaire du fond (27).

9. Dispositif de brossage (1) comprenant une structure porteuse (3), et au moins un module de brossage (2) selon l'une quelconque des revendications précédentes, le module de brossage (2) étant solidaire de la structure porteuse (3), la structure porteuse (3) étant apte à être solidaire d'une surface d'ancrage.

10. Dispositif de brossage (1) selon la revendication 8 ou 9, **caractérisé en ce que** la structure porteuse (3) comprend un mât (36) comprenant une première portion (38), un module de brossage (2) étant solidaire de la première portion (38) et d'un socle (37), le socle (37) étant destiné à être solidaire d'une surface d'ancrage.

11. Dispositif de brossage (1) selon la revendication précédente, **caractérisé en ce que** le socle (37) définit une forme générale de tétraèdre présentant une assise (39) et un sommet (40), la première portion (38) étant solidaire du socle (37), la première portion (38) passant par le sommet (40), lorsque l'assise (39) repose sur le sol, la première portion (38) s'étend orthogonalement à partir du socle (37).

12. Dispositif de brossage (1) selon la revendication 10 ou 11, **caractérisé en ce que** le mât (36) intègre une deuxième portion (41), et une troisième portion (42) orthogonale par rapport à la première portion (38), un module de brossage (2) étant solidaire de la deuxième portion (41) et/ou un module de brossage (2) étant solidaire de la troisième portion (42), la deuxième portion (41) étant solidaire d'une part de la première portion (38), et d'autre part de la troisième portion (42), la première portion (38) et la troisième portion (42) s'étendant selon des directions orthogonales l'une de l'autre.

13. Dispositif de brossage (1) selon l'une quelconque des revendications 9 à 12, **caractérisé en ce qu'**une cale de réglage (43) est interposée entre le module de brossage (2) et la structure porteuse (3).
